# EUROPÄISCHE PATENTSCHRIFT

(11) **EP 3 113 987 B1**
(45) Veröffentlichungstag und Bekanntmachung des Hinweises auf die Patenterteilung: **09.05.2018**
(21) Anmeldenummer: 15708507.7
(22) Anmeldetag: 05.03.2015
(51) Int. Cl.: B60R 22/48, H01H 27/00

(54) **SCHALTER FÜR EIN GURTSCHLOSS EINER SICHERHEITSGURTEINRICHTUNG**
SWITCH FOR A BELT BUCKLE OF A SAFETY BELT APPARATUS
COMMUTATEUR DESTINÉ À UNE BOUCLE DE CEINTURE D'UN SYSTÈME DE CEINTURE DE SÉCURITÉ

(30) Priorität: 07.03.2014 DE 102014204199
(43) Veröffentlichungstag der Anmeldung: 11.01.2017
(73) Patentinhaber: Autoliv Development AB, 447 83 Vårgårda (SE)
(72) Erfinder: JÖRIMANN, Beat, 7402 Bonaduz (CH); KÄBISCH, Carsten, 7013 Domat / Ems (CH); MUSSATO, Marco, 9475 Sevelen (CH)
(74) Vertreter: Müller Verweyen
(86) Internationale Anmeldenummer: PCT/EP2015/054647
(87) Internationale Veröffentlichungsnummer: WO 2015/132348

(56) Entgegenhaltungen:
- US-A- 3 956 603
- US-A- 4 012 612

## Beschreibung

Die Erfindung betrifft einen Schalter für ein Gurtschloss einer Sicherheitsgurteinrichtung mit den Merkmalen des Oberbegriffs von Anspruch 1.

Grundsätzlich dienen Schalter in Gurtschlössern dazu, eine in dem Gurtschloss verriegelte Gurtzunge zu erkennen. Sofern über eine geeignete Sensoreinrichtung ein Insasse auf dem Fahrzeugsitz erkannt wird, aber durch den Schalter kein eine verriegelte Gurtzunge repräsentierendes Signal erzeugt wird, so kann z.B. ein optisches und/oder akustisches Signal erzeugt werden, welches erst dann abgeschaltet wird, wenn sich der Insasse angeschnallt hat, d.h. wenn eine Gurtzunge in dem Gurtschloss verriegelt ist. Ferner kann das Signal auch dazu verwendet werden, dass bestimmte zusätzliche Rückhalteeinrichtungen, wie z.B. Airbageinrichtungen, im Unfall bewusst nicht oder nur dann aktiviert werden, wenn zuvor eine verriegelte Gurtzunge erkannt wurde, d.h. wenn der Schalter ein Signal erzeugt hat.

Eine mögliche Ausführungsform sind dabei Schalter mit berührungslosen Hallsensoren, welche aber grundsätzlich störanfällig gegenüber externen Magnetfeldern sind.

Ferner ist die Verwendung von mechanischen Schaltern z.B. aus der EP 1 485 276 B1 oder der DE 10 2012 208 779 A1 bekannt. Bei diesen Schaltern sind zwei elektrisch leitfähige Kontaktelemente vorgesehen, welche Teil eines elektrischen Kreislaufs sind. Eines der Kontaktelemente ist als eine Kontaktfeder ausgebildet und ragt mit einem Abschnitt in einen Einführkanal, in den ein Auswerfer des Gurtschlosses während der Verriegelungsbewegung der Gurtzunge eingeschoben wird. Durch das Einschieben des Auswerfers gelangt dieser unmittelbar zur Anlage an der Kontaktfeder, so dass die Kontaktfeder zu einer Bewegung gezwungen wird, wodurch der Kontakt der Kontaktelemente geöffnet oder geschlossen wird. Aufgrund des Öffnens oder des Schließens des Kontaktes wird dann ein Signal erzeugt, welches repräsentativ für die in dem Gurtschloss verriegelte Gurtzunge ist. Je nachdem, ob das Signal durch Schließen oder Öffnen des Kontaktes der Kontaktelemente erzeugt wird, wird der Schalter auch als Schließer oder Öffner bezeichnet. Damit der Kontakt sicher geöffnet oder geschlossen wird, ragt die Kontaktfeder zumindest mit einem Abschnitt in den Einführkanal, während die Kontaktstelle in einem geschützten Hohlraum außerhalb des Einführkanals angeordnet ist. Die Kontaktfeder muss daher eine komplexe Geometrie aufweisen, damit das eingeführte Teil in dem Einführkanal in jedem Fall zwangsläufig an der Kontaktfeder zur Anlage gelangt, und die Kontaktfeder während der weiteren Einschubbewegung zum Öffnen oder Schließen des Kontaktes entsprechend bewegt wird.

Die Funktionsfähigkeit des Schalters hängt damit von der Einhaltung der komplexen Geometrie der Kontaktfeder ab, welche z.B. durch die Dauerbelastung einer Vielzahl von Betätigungszyklen verändert werden kann. Ferner muss die Kontaktfeder abriebfest ausgebildet sein und eine ausreichende Biegewechselfestigkeit für eine sehr hohe Anzahl von Steckvorgängen des Gurtschlosses aufweisen, damit das Signal auch noch nach einer größeren Lebensdauer des Gurtschlosses funktionssicher erzeugt wird. Daneben muss die Kontaktfeder als Teil des Kontaktes selbstverständlich auch die Anforderungen hinsichtlich der elektrischen Leitfähigkeit erfüllen.

Aus der US 3,956,603 ist ferner ein Gurtschloss bekannt, bei der die Kontaktpaarung mit einer Kontaktfeder und einem feststehenden Kontakt außerhalb des Einführkanals angeordnet ist, während die Bewegung der Kontaktfeder durch ein in den Einführkanal hineinragendes Kopplungsglied erzwungen wird. Das schwenkbare Kopplungsglied ragt mit einem ersten Abschnitt in den Einführkanal hinein, und ist so geformt und gelagert, dass es während der Einführbewegung durch die eingeführte Gurtzunge verschwenkt wird und dabei mit einem zweiten Abschnitt an der Kontaktfeder zur Anlage gelangt. Während der weiteren Einführbewegung der Gurtzunge wird das Kopplungsglied weiter verschwenkt, wodurch die Kontaktfeder eine erzwungene Bewegung zu dem feststehenden Kontakt ausführt und der Kontakt geöffnet wird. Das Kopplungsglied stützt sich dabei über eine zusätzliche Feder an dem Gehäuse des Schalters ab, so dass es federbelastet in eine Stellung gedrängt wird, in der es mit dem ersten Abschnitt in den Einführkanal eingreift. Der Vorteil dieser Lösung ist darin zu sehen, dass die Kontaktfeder nicht mehr selbst in den Einführkanal eingreift, und die Öffnungsbewegung der Kontaktfeder durch das Kopplungsglied erzwungen wird, dessen Bewegung selbst wiederum durch die eingeführte Gurtzunge erzwungen wird. Der Auswerfer oder die Gurtzunge liegen damit statt an der Kontaktfeder an dem Kopplungsglied an, welches die Bewegung überträgt. Insgesamt kann die Kontaktfeder dadurch geschont werden. Außerdem kann die Kontaktfeder dadurch eine erheblich einfachere Geometrie aufweisen, so dass sie einfacher herzustellen ist, und ihre Funktion insbesondere nicht mehr von der Einhaltung der komplexen Geometrie abhängig ist. Ferner kann die Kontaktfeder für die erforderliche Biegewechselfestigkeit einfacher und funktionssicherer ausgelegt werden.

Ferner ist aus der US 4,012,612, die den Oberbegriff des Anspruchs 1 bildet, ein Gurtschloss mit einem Schalter bekannt, bei dem das Kopplungsglied zusätzlich mit dem zweiten Abschnitt stellungsunabhängig an der Kontaktfeder anliegt, so dass die Bewegung des Kopplungsgliedes unmittelbar und ohne eine zeitliche Verzögerung auf die Kontaktfeder übertragen wird.

Aufgabe der Erfindung ist es, einen kostengünstig herzustellenden Schalter für ein Gurtschloss einer Sicherheitsgurteinrichtung mit einer weiter verbesserten Funktionssicherheit zu schaffen.

Gemäß dem Grundgedanken der Erfindung wird vorgeschlagen, dass das Kopplungsglied und die Kontaktfeder durch einen formschlüssigen Eingriff bewegungstechnisch zueinander geführt sind. Durch die vorgeschlagene Lösung kann die Schadenswahrscheinlichkeit dadurch verringert werden, indem die Wahrscheinlichkeit eines unbeabsichtigten Abrutschens der Kontaktfeder von dem zweiten Abschnitt des Kopplungsgliedes verringert wird.

Eine besonders gute und insbesondere zweiseitige Führung kann dadurch verwirklicht werden, indem die Führung durch eine Nut in der Kontaktfeder und einen in die Nut eingreifenden Vorsprung des Kopplungsgliedes gebildet ist.

Weiter wird vorgeschlagen, dass das Kopplungsglied schwenkbar gelagert ist und die Kontaktfeder derart zu dem Kopplungsglied angeordnet ist, dass die Nut mit ihrer Längsrichtung senkrecht zu der Schwenkachse des Kopplungsgliedes ausgerichtet ist. Durch die vorgeschlagene Anordnung der Kontaktfeder und die Ausrichtung der Nut werden das Kopplungsglied und die Kontaktfeder während der Schwenkbewegung des Kopplungsgliedes bestmöglichst zueinander geführt, wobei die Nut zusätzlich die Bewegung der Kontaktfeder mit vorgeben kann und dadurch die Kontaktschließung oder Kontaktöffnung weiter verbessert werden kann.

Weiter wird vorgeschlagen, dass die Kontaktelemente in der Stellung, in der das Kopplungsglied mit dem zweiten Abschnitt in den Einführkanal hineinragt, aneinander anliegen, und das Kopplungsglied durch die Anlage an der Kontaktfeder und die Anlage der Kontaktfeder an dem anderen Kontaktelement zumindest in eine Richtung lagefixiert ist. Das Kopplungsglied wird dadurch über die Kontaktfeder zusätzlich lagefixiert, so dass unkontrollierte Bewegungen des Kopplungsgliedes und die Wahrscheinlichkeit eines dadurch bedingten Funktionsausfalls, z.B. durch ein Lösen des Kopplungsgliedes, verringert werden kann.

Diese Lagefixierung des Kopplungsgliedes kann ferner dadurch verstärkt werden, indem das Kopplungsglied durch die Kontaktfeder federbelastet ist, also in eine Richtung vorgespannt ist. Dabei ist das Kopplungsglied in der vorliegenden Ausführungsform in Richtung der Stellung vorgespannt, in der es mit dem ersten Abschnitt in den Einführkanal hineinragt, so dass das bei einem nachfolgenden Anschnallvorgang in den Einführkanal eingeführte Teil wieder an dem ersten Abschnitt zur Anlage gelangt und das Kopplungsglied entsprechend verschwenkt.

Weiter wird vorgeschlagen, dass das Kopplungsglied wenigstens einen Lagerzapfen aufweist, über den das Kopplungsglied um eine Schwenkachse schwenkbar gelagert ist, und der erste und zweite Abschnitt sich in Bezug zu der Schwenkachse radial nach außen erstrecken. Das Kopplungsglied kann dadurch eine Schwenkbewegung ausführen, während der der erste und der zweite Abschnitt die zum Lösen bzw. Schließen des Kontaktes erforderliche Bewegung ausführen. Dabei dienen der erste Abschnitt des Kopplungsgliedes durch die Anlage an dem in den Einführkanal eingeführten Teil zur Auslösung der Bewegung und der zweite Abschnitt zur Übertragung der Bewegung auf die Kontaktfeder.

Weiter wird vorgeschlagen, dass der erste und der zweite Abschnitt in Längsrichtung des Lagerzapfens versetzt zueinander angeordnet sind. Durch die vorgeschlagene Anordnung der beiden Abschnitte an dem Lagerzapfen können diese zum Eingriff in den Einführkanal und zur Anlage an der Kontaktfeder unabhängig voneinander individuell ausgelegt und geformt werden.

Ferner wird gemäß einer weiteren bevorzugten Ausführungsform vorgeschlagen, dass der Abstand zwischen dem Kontaktpunkt, an dem das in den Einführkanal einführbare Teil an dem ersten Abschnitt zur Anlage gelangt, und der Schwenkachse größer ist als der Abstand zwischen dem Kontaktpunkt, an dem die Kontaktfeder an dem zweiten Abschnitt anliegt, und der Schwenkachse des Kopplungsgliedes. Durch das vorgeschlagene Verhältnis der Abstände kann eine Art Übersetzung der Bewegung und damit auch eine Übersetzung der von dem in den Einführkanal eingeführten Teil auf den ersten Abschnitt des Kopplungsgliedes ausgeübten Kraft verwirklicht werden, wobei die Kraft, welche von dem in den Einführkanal eingeführten Teil auf den ersten Abschnitt des Kopplungsgliedes ausgeübt wird, in eine größere von dem zweiten Abschnitt auf die Kontaktfeder ausgeübte Kraft übersetzt wird. Ferner kann die Bewegung des ersten Abschnittes gleichzeitig in eine kleinere Bewegung des zweiten Abschnitts und damit auch in eine kleinere Bewegung der Kontaktfeder übersetzt werden, was insofern akzeptabel ist, da die Kontaktfeder nur von dem anderen Kontaktelement gelöst werden muss, wozu eine nur sehr kleine Bewegung der Kontaktfeder ausreichend ist. Dies kann ferner zum Vorteil genutzt werden, da der erforderliche Freiraum um die Kontaktfeder herum, welcher erforderlich ist, damit die Kontaktfeder die Bewegung ausführen kann, dadurch kleiner bemessen werden kann. Insgesamt kann der Schalter dadurch kleiner ausgeführt werden, was wiederum günstig hinsichtlich des nur sehr kleinen in dem Gurtschloss zur Verfügung stehenden Bauraumes ist. Als Kontaktpunkte sollen auch Kontaktflächen verstanden werden, wobei dann die Abstände von den Mitten der Kontaktflächen zu der Schwenkachse gemeint sind.

Die Erfindung wird im Folgenden anhand einer bevorzugten Ausführungsform unter Bezugnahme auf die beigefügten Figuren erläutert. Dabei zeigt:
- Fig. 1:: einen erfindungsgemäßen Schalter;
- Fig. 2:: den Schalter aus Fig. 1 ohne Deckel;
- Fig. 3:: einen Ausschnitt des Schalters;
- Fig. 4:: das Kopplungsglied mit der anliegenden Kontaktfeder;
- Fig. 5:: den Schalter in der "Geschlossenstellung" der Kontaktelemente; und
- Fig. 6:: den Schalter in der "offenstellung" der Kontaktelemente.

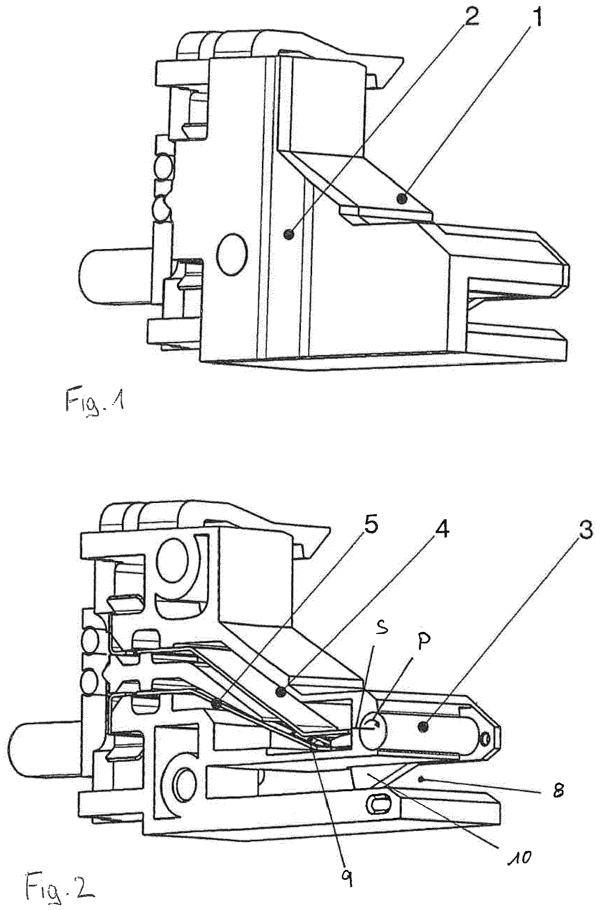

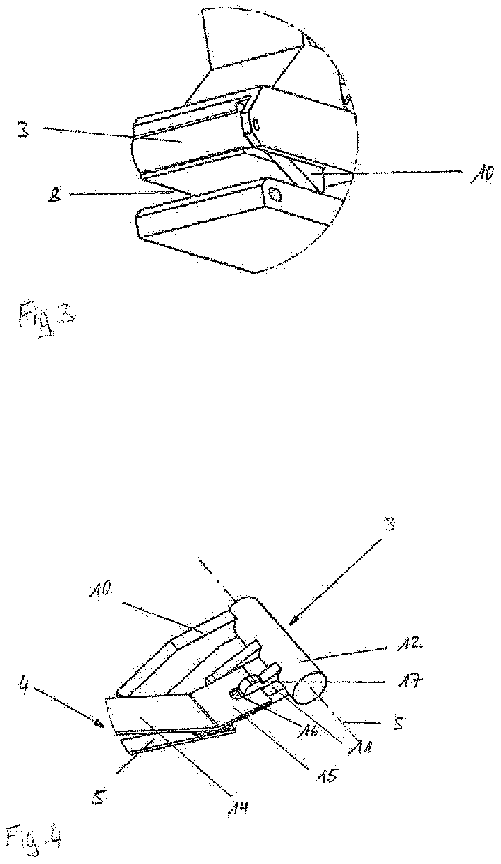

In der Fig. 1 ist ein erfindungsgemäßer Schalter mit einem Gehäuse 1 und einem das Gehäuse 1 seitlich abdeckenden Deckel 2 zu erkennen. Derselbe Schalter ist in der Fig. 2 ohne den Deckel 2 dargestellt, so dass zwei in dem Gehäuse 1 angeordnete Kontaktelemente 4 und 5 und ein darin angeordnetes Kopplungsglied 3 zu erkennen sind. Ferner weist der Schalter einen in der Fig. 3 zu erkennenden Einführkanal 8 auf, welcher einseitig von dem Deckel 2 verschlossen ist und durch zwei planparallele Wandungen des Schalters gebildet ist.

Das in der Darstellung untere Kontaktelement 5 ist durch ein gekrümmtes Kontaktblech gebildet, welches an einem Ende eine in Richtung des anderen Kontaktelementes 4 vorstehende Ausprägung 9 aufweist und zwischen zwei Wandungen des Gehäuses 1 eingespannt ist. Das untere Kontaktelement 5 kann dadurch als feststehend angesehen werden. Das in der Darstellung obere Kontaktelement 4 ist ebenfalls durch ein gekrümmtes Kontaktblech gebildet, welches mit einem Ende zwischen zwei Wandungen des Gehäuses 1 eingespannt ist. Das freie Ende des oberen Kontaktelementes 4 ragt in einen Freiraum 13 des Gehäuses 1 und ist dadurch geringfügig beweglich, so dass es bewusst dazu eingerichtet ist, bestimmte Bewegungen zum Öffnen und Schließen des Kontaktes ausführen zu können. Das obere Kontaktelement 5 bildet damit die bewegliche Kontaktfeder im Sinne der Erfindung.

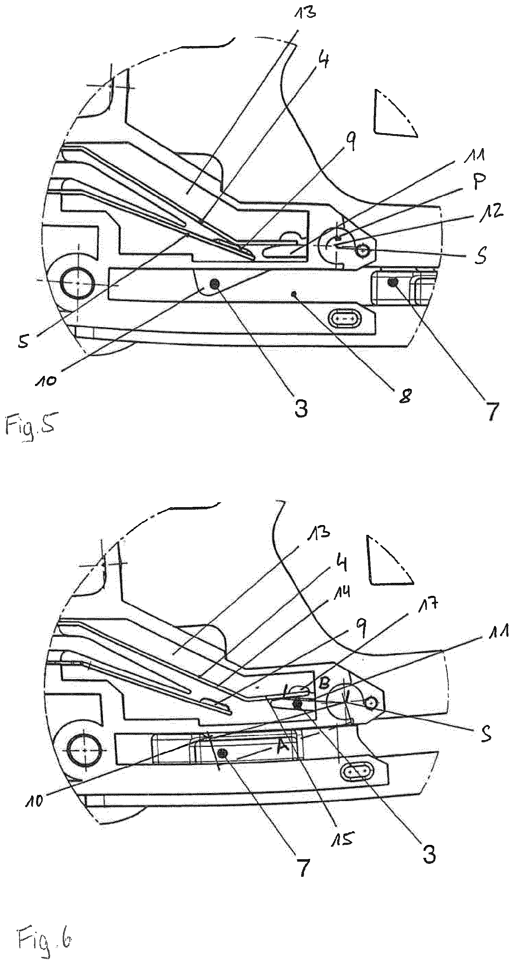

Das in der Fig. 4 größer dargestellte Kopplungsglied 3 weist einen stabförmigen Lagerzapfen 12 mit einem kreisförmigen Querschnitt und zwei endseitigen Lagerabschnitten auf. Das Kopplungsglied 3 ist um eine Schwenkachse S schwenkbar in dem Gehäuse 1 gelagert, welche identisch mit der Längsachse des Lagerzapfens 12 ist. Von dem Lagerzapfen 12 erstrecken sich ein erster Abschnitt 10 und ein zweiter Abschnitt 11 radial nach außen. Die beiden Abschnitte 10 und 11 sind durch Hebelarme verwirklicht, welche nebeneinander, also in Richtung der Längsachse des Lagerzapfens 12 versetzt an diesem angeordnet sind. Die beiden Abschnitte 10 und 11 sind unterschiedlich ausgerichtet, so dass der erste Abschnitt 10 in der in der Fig. 5 dargestellten "Geschlossenstellung" der Kontaktelemente 4 und 5 in den Einführkanal 8 hineinragt, und der zweite Abschnitt 11 an der Unterseite des oberen Kontaktelements 4 anliegt. Das obere Kontaktelement 4 liegt in dieser Stellung an der Ausprägung 9 des unteren Kontaktelementes 5 an, der Kontakt ist also geschlossen.

Die Kontaktfeder, also das obere Kontaktelement 4, weist einen ersten schräg nach unten verlaufenden Streifen 14 und einen von dem Streifen 14 in einem Winkel in der "Geschlossenstellung" in horizontaler Richtung vorstehenden Halteabschnitt 15 auf. Die Kontaktfeder liegt in der "Geschlossenstellung" mit der Kante des Überganges von den Streifen 14 in den Halteabschnitt 15 an der Ausprägung 9 des unteren Kontaktelementes 5 an, so dass sich ein sehr kleiner, im Idealfall punktförmiger Kontakt zwischen den Kontaktelementen 4 und 5 ergibt. Die Ausprägung 9 ist dazu streifenförmig ausgebildet und mit ihrer Längsachse senkrecht zu der daran anliegenden Kante des oberen Kontaktelementes 4 ausgerichtet. In dem Halteabschnitt 15 ist ferner eine Nut 16 vorgesehen, in die das Kopplungsglied 3 mit einem an dem zweiten Abschnitt 11 vorgesehenen Vorsprung 17 eingreift. Die Nut 16 und der darin eingreifende Vorsprung 17 bilden eine formschlüssige Verbindung der Kontaktfeder und des Kopplungsgliedes 3, welche eine Bewegung der beiden Teile ausschließlich in Richtung der Längsachse der Nut 16 ermöglicht. In die anderen Richtungen bildet die formschlüssige Verbindung eine Sicherung gegen ein unbeabsichtigtes Abrutschen der Kontaktfeder von dem Kopplungsglied 3. Die Nut 16 ist so ausgerichtet und geformt, dass ihre Längsachse in der montierten Stellung senkrecht zu der Schwenkachse S des Kopplungsgliedes 3 verläuft, so dass das Kopplungsglied 3 um die Schwenkachse S verschwenken kann, während der Vorsprung 17 dabei in der Nut 16 eine Längsbewegung ausführt.

Beim Anlegen des Sicherheitsgurtes schiebt der Insassen eine Gurtzunge in ein nicht dargestelltes Gurtschloss ein, wodurch in der vorliegenden Ausführungsform ein Auswerfer 7 in den Einführkanal 8 eingeschoben wird. Statt des Auswerfers 7 kann aber auch die Gurtzunge selbst, ein Verriegelungsteil oder ein bewegungstechnisch mit einem dieser Teile gekoppeltes Teil in den Einführkanal 8 eingeschoben werden. Der Auswerfer 7 gelangt während der Einschiebebewegung in den Einführkanal 8 zunächst an dem ersten Abschnitt 10 des Kopplungsgliedes 3 zur Anlage und verschwenkt das Kopplungsglied 3 anschließend in die in der Fig. 6 gezeigte Stellung. Durch das Verschwenken des Kopplungsgliedes 3 wird die Kontaktfeder über den zweiten Abschnitt 11 des Kopplungsgliedes 3 angehoben, und der Kontakt zwischen den Kontaktelementen 4 und 5 wird aufgehoben. Diese Stellung wird auch als "Offenstellung" des Schalters bezeichnet. Da die Kontaktfeder bereits in der "Geschlossenstellung" des Schalters an dem zweiten Abschnitt 11 des Kopplungsgliedes 3 anliegt, wird die Kontaktfeder unmittelbar mit dem Beginn der Schwenkbewegung des Kopplungsgliedes 3 angehoben. Außerdem wird das Kopplungsglied 3 durch die erfindungsgemäße Lösung gleichzeitig in der "Geschlossenstellung" des Schalters durch die Anlage der Kontaktfeder gleichzeitig mit dem ersten Abschnitt 10 in den Einführkanal 8 gedrängt.

Der Abstand A zwischen der Schwenkachse S und der Kontaktfläche, an der der Auswerfer 7 an dem ersten Abschnitt 10 anliegt, ist bewusst größer als der Abstand B zwischen der Schwenkachse S und der Kontaktfläche, an der das obere Kontaktelement 4 an dem zweiten Abschnitt 11 anliegt. Dadurch kann eine Übersetzung verwirklicht werden, mit der die von dem Auswerfer 7 auf das Kopplungsglied 3 ausgeübte Kraft in eine größere von dem Kopplungsglied 3 auf die Kontaktfeder ausgeübte Kraft übersetzt wird. Ferner kann der von dem zweiten Abschnitt 11 des Kopplungsgliedes 3 und der von der Kontaktfeder zurückgelegte Weg in Bezug zu dem von dem ersten Abschnitt 10 zurückgelegten Weg in eine kürzere Wegstrecke übersetzt werden, so dass der erforderliche Freiraum 13 entsprechend klein bemessen werden kann, und der erforderliche Bauraum in dem Gurtschloss nur geringfügig durch den Freiraum 13 vergrößert wird.

Die Abschnitte 10 und 11 sind seitlich versetzt an dem Lagerzapfen 12 angeordnet, d.h. der erste Abschnitt 10 ist an einer Seite des Lagerzapfens 12 angeordnet, während der zweite Abschnitt 11 ausgehend von dem ersten Abschnitt 10 zur Mitte des Lagerzapfens 12 hin versetzt angeordnet ist. Die Abschnitte 10 und 11 sind jeweils durch Hebelarme gebildet, welche sich in unterschiedlichen Winkeln radial von dem Lagerzapfen 12 erstrecken. Der Lagerzapfen 12 erstreckt sich seitlich über die Abschnitte 10 und 11 hinaus, so dass der Lagerzapfen 12 an seinen Enden entsprechende freie Lagerabschnitte aufweist, mit denen er in dem Gehäuse 1 schwenkbar gelagert ist.

Der Kontakt der Kontaktelemente 4 und 5 ist bewusst in einem Hohlraum des Gehäuses 1 angeordnet. Durch die Anordnung des Kontaktes kann dieser vor eintretenden Schmutzpartikeln geschützt werden. Die Übertragung der Bewegung wird hier bewusst durch das Kopplungsglied 3 bewirkt, welches mit dem ersten Abschnitt 10 in den Einführkanal 8 hineinragt und entsprechend abriebfest ausgebildet sein kann. Das Kopplungsglied 3 kann z.B. als Kunststoffspritzteil ausgeführt sein. Die Kontaktelemente 4 und 5 können als Stanzteile aus einem Metallblech hergestellt sein, wobei die Formtoleranz aufgrund der Streifenform der Kontaktelemente 4 und 5 und der erfindungsgemäßen dauerhaften Anlage des oberen Kontaktelementes 4 an dem zweiten Abschnitt 11 des Kopplungsgliedes 3 bewusst größer gewählt werden kann. Außerdem werden die Kontaktelemente 4 und 5 zum Schließen und Öffnen des Kontaktes aufgrund der erfindungsgemäßen Lösung nur geringfügig bewegt, so dass die Schadenswahrscheinlichkeit auch nach einer hohen Anzahl von Verriegelungsvorgängen des Gurtschlosses deutlich verringert werden kann.

## Patentansprüche

1. Schalter für ein Gurtschloss einer Sicherheitsgurteinrichtung mit:
- wenigstens zwei in einem Hohlraum des Schalters aneinander anliegenden oder zur Anlage aneinander gelangenden Kontaktelementen (4,5), wobei wenigstens eines der Kontaktelemente (4,5) als eine bewegliche Kontaktfeder ausgebildet ist, und
- einem Einführkanal (8), in den eine Gurtzunge, ein Verriegelungsteil, ein Auswerfer (7) oder ein bewegungstechnisch mit einem dieser Teile gekoppeltes Teil während der Ver- und Entriegelungsbewegung der Gurtzunge zumindest mit einem Abschnitt ein- und ausführbar ist, und
- einem beweglich gelagerten Kopplungsglied (3), welches mit einem ersten Abschnitt (10) in den Einführkanal (8) hineinragt und einen zweiten der Kontaktfeder zugeordneten Abschnitt (11) aufweist, wobei
- das beweglich gelagerte Kopplungsglied (3) mit dem zweiten Abschnitt (11) stellungsunabhängig an der Kontaktfeder anliegt,
**dadurch gekennzeichnet, dass**
- das Kopplungsglied (3) und die Kontaktfeder durch einen formschlüssigen Eingriff bewegungstechnisch zueinander geführt sind.

2. Schalter nach Anspruch 1, **dadurch gekennzeichnet, dass**
- die Führung durch eine Nut (16) in der Kontaktfeder und einen in die Nut (16) eingreifenden Vorsprung (17) des Kopplungsgliedes (3) gebildet ist.

3. Schalter nach Anspruch 2, **dadurch gekennzeichnet, dass**
- das Kopplungsglied (3) schwenkbar gelagert ist und die Kontaktfeder derart zu dem Kopplungsglied (3) angeordnet ist, dass die Nut (16) mit ihrer Längsrichtung senkrecht zu der Schwenkachse (S) des Kopplungsgliedes (3) ausgerichtet ist.

4. Schalter nach einem der vorangegangenen Ansprüche, **dadurch gekennzeichnet, dass**
- die Kontaktelemente (4,5) in der Stellung, in der das Kopplungsglied (3) mit dem ersten Abschnitt (10) in den Einführkanal (8) hineinragt, aneinander anliegen, und
- das Kopplungsglied (3) durch die Anlage an der Kontaktfeder und die Anlage der Kontaktfeder an dem anderen Kontaktelement (4,5) zumindest in eine Richtung lagefixiert ist.

5. Schalter nach einem der vorangegangenen Ansprüche, **dadurch gekennzeichnet, dass**
- das Kopplungsglied (3) wenigstens einen Lagerzapfen (12) aufweist, über den das Kopplungsglied (3) um eine Schwenkachse (S) schwenkbar gelagert ist, und
- der erste und der zweite Abschnitt (10,11) sich in Bezug zu der Schwenkachse (S) radial nach außen erstrecken.

6. Schalter nach Anspruch 5, **dadurch gekennzeichnet, dass**
- der erste und der zweite Abschnitt (10,11) in Längsrichtung des Lagerzapfens (12) versetzt zueinander angeordnet sind.

7. Schalter nach Anspruch 5 oder 6, **dadurch gekennzeichnet, dass**
- der Abstand (A) zwischen dem Kontaktpunkt, an dem das in den Einführkanal (8) einführbare Teil an dem ersten Abschnitt (10) zur Anlage gelangt, und der Schwenkachse (S) größer ist als der Abstand (B) zwischen dem Kontaktpunkt, an dem die Kontaktfeder an dem zweiten Abschnitt (11) anliegt, und der Schwenkachse (S) des Kopplungsgliedes (3).

## Claims

1. Switch for a belt lock of a safety belt device with:
- at least two contact elements (4,5) resting on one another in a hollow space of the switch or coming to rest on one another, wherein at least one of the contact elements (4, 5) is designed as a movable contact spring, and
- with an introductory channel (8) into which a belt tongue, a locking part, an ejector (7) or a part that is coupled by movement technology to one of these parts can be guided in and out during the locking and unlocking movement of the belt tongue at least with one section, and
- with a movably supported coupling member (3) which projects with a first section (10) into the introductory channel (8) and comprises a second section (11) associated with the contact spring, wherein
- the movably supported coupling member (3) rests with the second section (11) on the contact spring independently of the position,
**characterized by that**
- the coupling member (3) and the contact spring are guided to one another by a positive engagement by movement technology.

2. Switch according to Claim 1, **characterized by that**
- the guide is formed by a groove (16) in the contact spring and by a projection (17) of the coupling member (3) engaging into the groove (16).

3. Switch according to Claim 2, **characterized by that**
- the coupling member (3) is pivotably supported and the contact spring is arranged in such a manner to the coupling member (3) that the groove (16) is aligned with its longitudinal direction vertically to the pivot axis (S) of the coupling member (3).

4. Switch according to one of the previous claims, **characterized by that**
- the contact elements (4, 5) rest on one another in the position in which the coupling member (3) projects with the first section (10) into the introductory channel (8), and
- the coupling member (3) is fixed at least in one direction in its position by the contacting of the contact spring and the resting of the contact spring on the other contact element (4, 5).

5. Switch according to one of the previous claims, **characterized by that**
- the coupling member (3) comprises at least one support pin (12) by which the coupling member (3) is pivotably supported about a pivot axis (S), and
- the first and the second sections (10, 11) extend radially outward relative to the pivot axis (S).

6. Switch according to Claim 5, **characterized by that**
- the first and the second sections (10, 11) are arranged offset relative to one another in the longitudinal direction of the support pin (12).

7. Switch according to Claim 5 or 6, **characterized by that**
- the distance (A) between the contact point at which the part that can be introduced into the introductory channel (8) comes to rest on the first section (10), and the pivot axis (S) is greater than the distance (B) between the contact point at which the contact spring rests on the second section (11), and the pivot axis (S) of the coupling member (3).

## Revendications

1. Commutateur destiné à une boucle de ceinture d'un système de ceinture de sécurité, comprenant :
- au moins deux éléments de contact (4, 5) en contact l'un avec l'autre ou venant en contact l'un avec l'autre dans un espace creux du commutateur, au moins un des éléments de contact (4, 5) étant réalisé sous la forme d'un ressort de contact mobile, et
- un canal d'introduction (8), dans lequel une languette de ceinture, une partie de verrouillage, un éjecteur (7) ou une pièce couplée de manière mobile à l'une de ces pièces peut être introduite et retirée au moins par une portion pendant le déplacement de verrouillage et de déverrouillage de la languette de ceinture, et
- un organe de couplage (3) monté mobile, qui dépasse par une première portion (10) dans le canal d'introduction (8) et qui comporte une seconde portion (11) associée au ressort de contact, dans lequel
- l'organe de couplage (3) monté mobile est en contact par la seconde portion (11) avec le ressort de contact indépendamment de la position,
**caractérisé en ce que**
- l'organe de couplage (3) et le ressort de contact sont guidés l'un par rapport à l'autre de manière mobile par un engagement par complémentarité de forme.

2. Commutateur selon la revendication 1, **caractérisé en ce que**
- le guidage est formé par une rainure (16) dans le ressort de contact et une saillie (17) de l'organe de couplage (3) venant en prise dans la rainure (16).

3. Commutateur selon la revendication 2, **caractérisé en ce que**
- l'organe de couplage (3) est monté pivotant et le ressort de contact est disposé de telle manière par rapport à l'organe de couplage (3) que la rainure (16) est orientée avec sa direction longitudinale perpendiculaire à l'axe de pivotement (S) de l'organe de couplage (3).

4. Commutateur selon l'une des revendications précédentes, **caractérisé en ce que**
- dans la position dans laquelle l'organe de couplage (3) dépasse par la première portion (10) dans le canal d'introduction (8), les éléments de contact (4, 5) sont en contact l'un avec l'autre, et
- l'organe de couplage (3) est dans une position fixe au moins dans une direction en raison du contact avec le ressort de contact et du contact du ressort de contact avec l'autre élément de contact (4, 5).

5. Commutateur selon l'une des revendications précédentes, **caractérisé en ce que**
- l'organe de couplage (3) comporte au moins un tourillon (12), par le biais duquel l'organe de couplage (3) est monté pivotant sur un axe de pivotement (S), et
- la première et la seconde portion (10, 11) s'étendent radialement vers l'extérieur par rapport à l'axe de pivotement (S).

6. Commutateur selon la revendication 5, **caractérisé en ce que**
- la première et la seconde portion (10, 11) sont disposées décalées l'une par rapport à l'autre dans la direction longitudinale du tourillon (12).

7. Commutateur selon la revendication 5 ou 6, **caractérisé en ce que**
- la distance (A) entre le point de contact, auquel la pièce pouvant être introduite dans le canal d'introduction (8) vient en contact avec la première portion (10), et l'axe de pivotement (S) est supérieure à la distance (B) entre le point de contact, auquel le ressort de contact est en contact avec la seconde portion (11), et l'axe de pivotement (S) de l'organe de couplage (3).
